# EUROPEAN PATENT APPLICATION

(11) **EP 0 771 964 A1**
(43) Date of publication of application: **07.05.1997**
(21) Application number: 96117617.9
(22) Date of filing: 04.11.1996
(51) Int. Cl.: F16F 1/38, F16F 1/387

(54) **Differential-yield elastic connecting member**

(30) Priority: 03.11.1995 IT TO950885
(71) Applicant: RFT S.p.A., 10128 Torino (IT)
(72) Inventor: Bortolan, Adriano, 10100 Torino (IT)
(74) Representative: Plebani, Rinaldo

(57) **Abstract**

An elastic connecting member or fastener for elastically connecting, and limiting the transmission of vibration between, two mechanical parts, and which presents a supporting bush (2) connected to one of the parts and fitted with three annular elastic elements (4, 5, 6), the intermediate one comprises a ring (7c) made of high-hysteresis natural rubber, and the end ones of which comprise rings (7a, 7b) made of low-hysteresis natural rubber; the end rubber elements (7b, 7a) are dome-shaped and co-molded between an inner ring (8), fitted to the bush (2), and an outer ring (9) fittable to the other part for connection; the intermediate rubber element (7c) presents a triangular section with the base of the section co-molded on to the respective inner ring (8), and the peripheral apex portion (14) inserted inside and contacting in low-friction manner an outer ring (9c) constituted by a nylon ring charged with teflon; and, in use, axial vibration of a given frequency is damped by the end elements (4, 6), while radial vibration of a different frequency is damped by the high-hysteresis intermediate element (5).

## Description

The present invention relates to a differential-yield elastic connecting member, and more specifically to an elastic fastener comprising rubber elements and for elastically connecting separate mechanical components while permitting limited mutual displacement along one or more axes. The elastic fastener according to the invention is especially suitable for use in the car industry for connecting, say, a body element to a frame element subject to a limited amount of vibration at different frequencies and in the direction, axial or radial, of application. The rubber elements in the fastener prevent vibration of the frame from being transmitted to the body.

Another possible application is the connection of a shock absorber rod to a vehicle structure, to achieve an elastic but sufficiently slack connection to limit the transmission of vibration from the rod to the structure.

Currently known elastic fasteners for elastically connecting separate mechanical elements comprise a metal supporting bush, which is fitted to one of the elements; a rubber sleeve surrounding and integral with the bush; and a metal casing fitted externally to and integral with the sleeve, and which is made integral with the other element for connection.

The yield and vibration damping characteristics of elastic fasteners of the above type, however, are only satisfactory within a small frequency range and for vibration along one axis, normally the one parallel to the axis of the supporting bush.

Such elastic fasteners are therefore poorly suited for connecting mechanical components, such as automotive parts, subject to vibration in different directions and within an extensive frequency range.

It is an object of the present invention to provide an elastic connecting member designed to overcome the drawbacks typically associated with known types.

It is a further object of the present invention to provide a connecting member for elastically connecting two mechanical parts, while at the same time providing for differential damping of vibration and/or stress in one or more directions and within a wide frequency range.

According to the present invention, there is provided an elastic connecting member for connecting separate mechanical parts, and comprising inner supporting means connectable to a first part; a number of annular elastic elements integral with the supporting means; and corresponding peripheral connecting elements for connecting each elastic element separately to a second part; characterized in that said number of annular elastic elements comprises low-hysteresis natural rubber elements alternating with at least one high-hysteresis natural rubber element.

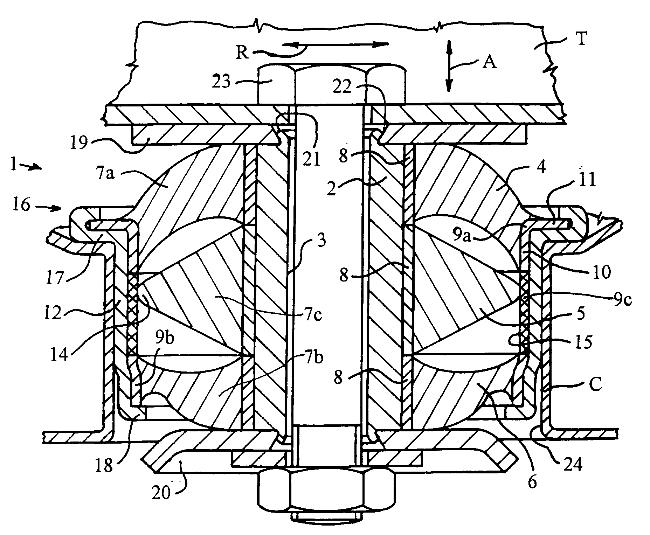

A preferred, non-limiting embodiment of the present invention will be described by way of example with reference to the accompanying drawing showing an axial section of an elastic connecting member, or elastic fastener, in accordance with the present invention.

With reference to the accompanying drawing, a connecting member 1, hereinafter referred to as an elastic fastener, comprises a cylindrical metal bush 2 presenting an axial through hole 3 and fitted with annular elastic elements, e.g. three elastic elements indicated 4, 5 and 6. Each elastic element comprises an annular body 7 of natural rubber housed inside the circular gap between a respective inner supporting ring 8 and a respective concentric outer supporting ring 9, the outer rings forming peripheral connecting means for connecting elastic elements 4, 5 and 6 to one of the mechanical parts for connection; each annular body 7 is fixed to the respective inner ring 8, while at least two of the annular bodies 7, e.g. body 7a of element 4 and body 7b of element 6, are also fitted inside respective outer metal rings 9a and 9b; annular bodies 7 are fitted to the respective metal rings, both inner and outer, by curing the rubber at the co-molding stage; the inner ring 8 of each elastic element 4, 5 and 6 is a cylindrical metal body, and presents an inside diameter enabling it to be forced slightly on to bush 2; and the outer rings 9a and 9b of top and bottom elastic elements 4 and 6 may be formed as appropriate to the type of assembly and application of the fastener. In the preferred, non-limiting embodiment shown in the accompanying drawing, the metal outer ring 9a of top elastic element 4 comprises a cylindrical portion 10 bent roughly 90° outwards to form a flat radial portion 11 for fitment to an outer casing 12 as described later on; and the metal outer ring 9b of bottom elastic element 6 is cylindrical, concentric with inner ring 8, and smaller in diameter than portion 10 to facilitate insertion of elastic element 6 inside casing 12.

According to the present invention, to better absorb the vibration applied, for example, to bush 2 both in axial direction A and radial direction R, the annular bodies 7a, 7b of the top and bottom elastic elements 4 and 6 are made of low-hysteresis natural rubber, and are dome-shaped with their respective convexities facing each other; and body 7c of intermediate elastic element 5 is made of high-hysteresis natural rubber, and is annular with a right triangle cross-section, the base surface cured to metal inner ring 8, and the apex, which forms the peripheral portion 14 of the intermediate element, facing casing 12.

Elastic fastener 1 is assembled by first fitting top and intermediate elastic elements 4 and 5 to bush 2; peripheral portion 14 of ring 7c of intermediate element 5 is then enclosed inside the corresponding element 9c, which is a ring 15 made of nylon charged with teflon; the inside diameter of ring 15 is such as to interfere slightly with peripheral portion 14, which is permitted to slide in low-friction manner on the inner surface of ring 15; and bottom elastic element 6 is fitted on to bush 2, against intermediate element 5 and on the opposite side to top element 4.

At this point, the group of three elements 4, 5 and 6 fitted to bush 2 is inserted inside casing 12, which, at one end 16, presents a projection 17 bent radially at an angle of about 90° and which contacts radial portion 11 of ring 9a; projection 17 is cold bent roughly 180° to firmly grip portion 11; and, similarly, end 18, opposite projection 17, of casing 12 is clinched on to outer ring 9b of bottom elastic element 6 to firmly grip nylon ring 15 between the outer rings 9 of low-hysteresis rubber elements 4 and 6.

Projection 17, bent over on to portion 11, forms a strong shoulder by which to fit casing 12 of elastic fastener 1 to one of the mechanical parts for connection, e.g. a vehicle body element C. Similarly, to fit bush 2 with an adequate supporting surface to another mechanical part, e.g. a frame portion T for connection to body element C, elastic fastener 1, assembled as described, is made integral with two opposed plates 19 and 20 by riveting or punching two edges 21 and 22 of bush 2 projecting from the ends thereof and fitted inside respective holes in the two plates.

In actual use, when elastic fastener 1 is subjected to vibration within a given frequency range in axial direction A, top and bottom low-hysteresis rubber elements 4 and 6 are deformed paraelastically, while intermediate element 5, the peripheral portion 14 of which is permitted to slide in low-friction manner on the inner surface of nylon/teflon ring 15, is ineffective. Conversely, when elastic fastener 1 is subjected to vibration in radial direction R, top and bottom elements 4 and 6, on account of their low hysteresis and by operating in parallel, are only marginally effective in neutralizing the radial stress, whereas high-hysteresis intermediate element 5, being compressed and deformed, in the direction of its maximum thickness, between nylon/teflon ring 15 and inner ring 8, intervenes energetically to damp the radial vibration at frequencies other than those of the axial vibration, which are normally in a higher range.

For a given stress, therefore, on account of the different hysteresis of elastic elements 4, 6 as compared with element 5, the elastic elements of fastener 1 according to the invention are deformed differently in the axial and radial directions.

Fastener 1 also provides for damping vibration at at least two different frequencies in the two directions of application.

Bush 2 is fitted, for example, to frame T by means of a screw 23 fitted through hole 3; and casing 12 may be fitted to body C inside a circular seat 24 formed by drawing the sheet metal, and secured by means of brackets not shown.

## Claims

1. A differential-yield elastic connecting member for elastically connecting separate mechanical parts (C; T), and comprising inner supporting means (2; 8) connectable to a first (T) of said parts; a number of annular elastic elements (4; 5; 6) integral with said supporting means (2; 8); and corresponding peripheral connecting elements (9) for connecting each of said elastic elements (4; 5; 6) separately to a second (C) of said parts; characterized in that said number of annular elastic elements (4; 5; 6) comprises low-hysteresis natural rubber elements (7a; 7b) alternating with at least one high-hysteresis natural rubber element (7c).

2. A connecting member as claimed in Claim 1, characterized in that said low-hysteresis natural rubber elements (7a, 7b) are dome-shaped with opposite convexities; and said high-hysteresis natural rubber element (7c) presents a right triangle section.

3. A connecting member as claimed in Claim 1 or 2, characterized in that said rubber elements (7) are co-molded on to respective annular inner supporting elements (8) fittable to said bush (2).

4. A connecting member as claimed in one of the foregoing Claims from 1 to 3, characterized in that each of said low-hysteresis rubber elements (7b, 7a) is co-molded inside a respective said peripheral connecting element (9).

5. A connecting member as claimed in one of the foregoing Claims, characterized in that said high-hysteresis rubber element (7c) is inserted inside a cylindrical element (9c) constituted by a ring (15) made of nylon charged with teflon, and presents an apex of said triangular section contacting said cylindrical element (9c) in low-friction manner.
